# EUROPÄISCHE PATENTSCHRIFT

(11) **EP 3 037 699 B1**
(45) Veröffentlichungstag und Bekanntmachung des Hinweises auf die Patenterteilung: **25.07.2018**
(21) Anmeldenummer: 14199741.1
(22) Anmeldetag: 22.12.2014
(51) Int. Cl.: F16K 11/087, F16K 27/06

(54) **Mischerventil**
Mixer valve
Vanne mélangeuse

(43) Veröffentlichungstag der Anmeldung: 29.06.2016
(73) Patentinhaber: Grundfos Holding A/S, 8850 Bjerringbro (DK)
(72) Erfinder: Iversen, Käre, 8870 Langä (DK); Overgaard, Torben Heilskov, 8850 Bjerringbro (DK)
(74) Vertreter: Patentanwälte Vollmann & Hemmer

(56) Entgegenhaltungen:
- CN-A- 101 196 244
- US-A1- 2010 193 043
- US-B1- 6 488 261

## Beschreibung

Die Erfindung betrifft ein Heiz- oder Kühlanlagen- Regulierventil.

Heiz- oder Kühlanlagen-Regulierventile werden in hydraulischen Heiz- oder Kühlanlagen eingesetzt, um die Flüssigkeitsströmung zu regulieren. Insbesondere finden derartige Ventile beispielsweise als Mischerventile Verwendung, um zwei Flüssigkeitsströmungen, insbesondere Flüssigkeitsströmungen unterschiedlicher Temperatur, zu mischen. Derartige Mischerventile werden in Heizungs- oder Kühlanlagen eingesetzt, um die Vorlauftemperatur auf einen gewünschten Wert regulieren zu können.

Bekannte Ventile weisen beispielsweise drei Anschlusskanäle, z.B. zwei Eingänge und einen Ausgang auf, welche in einem Ventilraum münden, in welchem ein bewegliches Ventilelement angeordnet ist, durch dessen Verlagerung die Mündungen der Anschlusskanäle in den Ventilraum wechselseitig geschlossen und geöffnet werden können. Dazu sind im Bereich der Mündungen der Anschlusskanäle in dem Ventilraum Ventilsitze bzw. Dichtungen angeordnet. Diese müssen entweder durch eine Montageöffnung, durch welche das Ventilelement eingesetzt wird oder durch einen der Anschlusskanäle in den Ventilraum eingesetzt werden. Bei der Montage durch die Anschlusskanäle hindurch besteht der Nachteil, dass für die Wartung und zum Ersetzen der Ventilsitze die gesamte Ventileinheit von sich anschließenden Leitungen getrennt werden muss.

US 2010/0193043 A1 offenbart ein Kugelventil zum Einsatz in einer Heizungsanlage, um eine Wasserzufuhr und/oder ein Ausgleichsgefäß von der Heizungsanlage trennen zu können. Dieses Ventil weist ein kugelförmiges Ventilelement auf, welches zwischen Dichtungen gelagert ist. Die Dichtungen sind in Rohranschlussstücken für die Anschlussleitungen gelagert. Diese Anordnung hat den Nachteil, dass zum Austausch der Dichtungen die Rohranschlussstücke entfernt werden müssen, so dass das gesamte Ventil aus der Heizungsanlage ausgebaut werden muss. CN 101196244 A offenbart ein Hochdruckventil, welches ein kugelförmiges Ventilelement aufweist. Das Ventilgehäuse weist eine Montageöffnung auf, durch welche das Ventilelement und Dichtungen zugänglich sind. Nachteilig bei dieser Ausgestaltung ist, dass eine Dichtung nicht getauscht werden kann, ohne das Ventilelement ausbauen zu müssen. Eine ähnliche Anordnung ist aus US 6,488,261 B1 bekannt.

Im Hinblick auf diese Problematik ist es Aufgabe der Erfindung, eine verbesserte- ein verbessertes Heiz- oder Kühlanlagen- Regulierventil bereitzustellen, bei welchem sich erforderliche Dichtungen auch im eingebautem Zustand leicht austauschen lassen.

Diese Aufgabe wird durch ein Heiz- oder Kühlanlagen- Regulierventil mit den in Anspruch 1 angegebenen Merkmalen gelöst. Bevorzugte Ausführungsformen ergeben sich aus den Unteransprüchen, der nachfolgenden Beschreibung sowie den beigefügten Figuren.

Das erfindungsgemäße Heizanlagen- oder Kühlanlagen-Regulierventil weist in einem Ventilgehäuse einen Ventilraum auf, in welchem ein Ventilelement beweglich bzw. bewegbar angeordnet ist. Das Ventilelement dient dazu, zumindest einen Strömungsweg zu öffnen oder zu schließen und somit den wirksamen Querschnitt dieses Strömungsweges zu verändern. Darüber hinaus weist das Regulierventil zumindest drei Anschlüsse bzw. Anschlusskanäle, beispielsweise einen Ein- und Ausgang, auf. Das Regulierventil ist als Mischerventil oder als Strömungs-Teilungsventil mit zumindest drei Anschlusskanälen ausgebildet. Ein solches Mischerventil kann zum Mischen zweier Flüssigkeitsströmungen eingesetzt werden. In diesem Falle dienen zwei der Anschlusskanäle als Eingang und ein dritter der Anschlusskanäle als Ausgang. Umgekehrt kann ein solches Mischerventil auch als Strömungs-Teilungsventil zum Teilen einer Flüssigkeitsströmung eingesetzt werden. In diesem Fall dient einer der Anschlüsse als Eingang, während die beiden anderen Anschlüsse als Ausgänge dienen. Unabhängig davon, ob das Regulierventil zum Mischen oder zum Teilen von Flüssigkeitsströmungen eingesetzt wird, ist die Konfiguration bevorzugt so, dass alle drei Anschlusskanäle mit dem Ventilraum verbunden sind, wobei zwei Strömungswege gebildet werden, welche von zweien der Anschlüsse zu dem dritten bzw. in umgekehrter Richtung von dem dritten Anschluss zu jeweils einem der beiden der anderen Anschlüsse verlaufen. Dabei verlaufen die Strömungswege durch den Ventilraum und das Ventilelement ist in den Strömungswegen gelegen, so dass es durch seine Bewegung bzw. Positionierung die Strömungswege zumindest teilweise verschließen kann. Insbesondere ist das Ventielement so bewegbar, dass es das Verhältnis der Querschnitte der beiden Strömungswege zueinander ändern kann. Dabei ist weiter bevorzugt vorgesehen, dass wechselseitig einer der Strömungswege geöffnet und gleichzeitig der andere Strömungsweg geschlossen wird.

Die Anschlusskanäle sind mit einem Strömungsweg verbunden, welcher durch den Ventilraum verläuft und dessen Querschnitt durch Verlagerung des Ventilelementes zur Regulierung der Strömung veränderbar ist. Die Anschlusskanäle münden dazu jeweils mit einem ersten Ende in den Ventilraum und weisen ein entgegengesetztes zweites Ende auf, welches zur Verbindung mit einem fluidführenden Bauteil, beispielsweise einer Anschlussleitung, dient. An dem zweiten Ende kann beispielsweise ein Flansch zur Verbindung mit sich anschließenden fluidführenden Bauteilen, wie einer Anschlussleitung oder beispielsweise weiteren Komponenten einer Heizung oder Kühlanlage vorhanden sein. Die weiteren Komponenten können z.B. eine Umwälzpumpe sein.

In zumindest einem der Anschlusskanäle ist an dessen erstem Ende, das heißt angrenzend an den Ventilraum, ein Dichtelement angeordnet, welches mit dem Ventilelement in Anlage ist. Das Dichtelement bildet somit einen Ventilsitz für das Ventilelement. Das Ventilelement ist in bekannter Weise so angeordnet, dass es das Dichtelement zumindest teilweise, vorzugsweise vollständig, überdecken kann, so dass der von dem Dichtelement begrenzte bzw. umschlossene Strömungsquerschnitt teilweise oder ganz verschlossen wird. Dabei kommt das Dichtelement an einer Außenfläche des Ventilelementes dichtend zur Anlage. Bei der Bewegung des Ventilelementes gleitet dies über den von dem Dichtelement gebildeten Ventilsitz.

Erfindungsgemäß weist der zumindest eine Anschlusskanal, der an bzw. in dem Dichtelement angeordnet ist, zusätzlich zu seinem offenen zweiten Ende eine Montageöffnung auf, durch welche das Dichtelement in den Anschlusskanal einsetzbar und aus dem Anschlusskanal entnehmbar ist. Dies bedeutet, dass das Dichtelement weder durch den Ventilraum noch durch das zweite Ende des Anschlusskanals eingesetzt werden muss, sondern durch eine separate Montageöffnung in den Anschlusskanal eingesetzt und in diesem in die gewünschte Position angrenzend an den Ventilraum gebracht werden kann. Dies ermöglicht die Montage und Wartung des Dichtelementes ohne das Ventilelement aus dem Ventilraum entnehmen zu müssen oder das zweite Ende des Anschlusskanals von den sich angrenzenden fluidführenden Bauteilen, beispielsweise einer Anschlussleitung, trennen zu müssen. Dadurch wird Montage und Wartung des Dichtelementes deutlich vereinfacht.

Bei der Verwendung dreier Anschlusskanäle ist weiter bevorzugt in zwei Anschlusskanälen jeweils an deren ersten Ende ein Dichtelement angeordnet, welches einen Ventilsitz bildet und mit dem Ventilelement in Anlage ist. So werden für das Ventilelement zwei Ventilsitze in der oben beschriebenen Weise geschaffen. Dabei sind weiter bevorzugt beide Anschlusskanäle, in welchem ein Dichtelement angeordnet ist, in der oben beschriebenen Weise mit einer zusätzlichen Montageöffnung versehen, durch welche jeweils das Dichtelement in den Anschlusskanal und in seine Position angrenzend an den Ventilraum gebracht werden kann.

Die zumindest eine Montageöffnung ist bevorzugt durch ein abnehmbares Verschlusselement, beispielsweise durch einen lösbaren Deckel, verschlossen. Dabei ist das Verschlusselement nach außen abgedichtet, so dass im Bereich des Verschlusselementes keine Flüssigkeit aus dem Anschlusskanal nach außen austreten kann. Ein solches Verschlusselement kann beispielsweise als einschraubbarer Deckel, mit einem Bajonettverschluss verriegelbarer Deckel oder in ähnlicher Weise ausgebildet sein. In dem Deckel kann eine zusätzliche Dichtung, wie beispielsweise ein O-Ring oder eine anders geformte Elastomerdichtung angeordnet sein. Vorzugsweise ist das Verschlusselement so ausgebildet, dass es sich ohne Werkzeug oder mit üblichem Werkzeug, wie einen Maulschlüssel, öffnen lässt. Dazu kann das Verschlusselement ein Eingriffselement, wie einen Vorsprung oder eine Ausnehmung aufweisen, mit welcher beispielsweise ein Schraubenschlüssel, ein Schraubendreher oder ähnliches zum Lösen des Verschlusselements in Eingriff treten kann. Auch ein Verschrauben des Verschlusselementes mit separaten Schrauben ist denkbar.

Weiter bevorzugt weist der zumindest eine Anschlusskanal, in welchem das Dichtelement angeordnet ist, einen ersten in den Ventilraum mündenden und das Dichtelement aufnehmenden Kanalabschnitt und einen zweiten an das zweite Ende angrenzenden Kanalabschnitt auf, wobei die Montageöffnung an einem den Ventilraum abgewandten Axialende des ersten Kanalabschnittes gelegen ist. Der erste Kanalabschnitt erstreckt sich so zwischen dem Ventilraum und der Montageöffnung, so dass durch diesen Kanalabschnitt das Dichtelement bei geöffneter Montageöffnung eingesetzt und in seine an den Ventilraum angrenzende Sollposition gebracht werden kann. Der zweite Kanalabschnitt, welcher sich ausgehend von dem ersten Kanalabschnitt zu dem zweiten Ende des Anschlusskanals erstreckt, mündet in dem ersten Kanalabschnitt ein bzw. ist mit diesem verbunden, so dass eine fluidleitende Verbindung von dem zweiten Ende des Anschlusskanals bis zu dem Ventilraum geschaffen wird.

Der erste Kanalabschnitt erstreckt sich vorzugsweise zwischen dem Ventilraum und der Montageöffnung gerade. Besonders bevorzugt weist der erste Kanalabschnitt eine Erstreckungsrichtung auf, welche entlang der Mittelachse des Dichtelementes bzw. des von dem Dichtelement gebildeten Ventilsitzes verläuft. Diese Mittelachse ist im Falle eines runden Dichtelementes bevorzugt die Symmetrie- bzw. Mittelachse, um welche herum sich das Dichtelement rotationssymmetrisch erstreckt. Ein gerader Verlauf des ersten Kanalabschnittes hat den Vorteil, dass das Dichtelement in Erstreckungsrichtung des Kanalabschnittes gerade durch die Montageöffnung eingeschoben und in die an den Ventilraum angrenzende Position geschoben werden kann. Dazu kann das Dichtelement so ausgebildet sein, dass es ein Führungselement bzw. einen Führungskörper aufweist, welche an der Innenwandung des ersten Kanalabschnittes anliegt und so für eine Positionierung und Führung beim Einsetzen durch die Montageöffnung dient. Ein solcher die eigentliche Dichtung tragender Dichtelementträger kann darüber hinaus der Fixierung des Dichtelementes in dem Anschlusskanal dienen. Diese kann beispielsweise durch Verklemmen, Verschrauben oder eine andere geeignete Befestigung erfolgen.

Weiter bevorzugt ist im Inneren des Anschlusskanals, insbesondere an dessen ersten Ende, welches an den Ventilraum angrenzt, ein Anschlag, insbesondere in Form einer Anlageschulter ausgebildet, an welchem das Dichtelement bzw. ein das Dichtelement tragender Dichtelementträger zur Anlage kommt. Die Fixierung des Dichtelementes bzw. eines das Dichtelement tragenden Dichtelementträgers in der entgegengesetzten Axialrichtung oder auch in beiden Axialrichtungen kann über ein Sicherungsmittel, welches beispielsweise mit einem Gewinde oder einem Bajonett mit einer Wandung des Anschlusskanals in Eingriff tritt, erfolgen. Alternativ kann die axiale Sicherung auch über das die Montageöffnung verschließende Verschlusselement erfolgen.

In dem Fall, dass der Anschlusskanal, wie vorangehend beschrieben, aus zwei Kanalabschnitten gebildet ist, mündet der zweite Kanalabschnitt vorzugsweise umfänglich in den ersten Kanalabschnitt ein. Dies hat den Vorteil, dass der erste Kanalabschnitt in axialer Richtung an seinem zweiten Ende, d.h. axialen Stirnende vollständig geöffnet ausgebildet sein kann, um dort die Montageöffnung zum Einsetzen des Dichtelementes zu bilden. So wird der gesamte Innenquerschnitt des ersten Kanalabschnittes freigegeben, um durch diesen das Dichtelement einsetzen zu können.

Weiter bevorzugt erstreckt sich der erste Kanalabschnitt radial zu dem Ventilraum und/oder dem in dem Ventilraum angeordneten Ventilelement. Im Falle, dass es sich um ein drehbares Ventilelement handelt, erstreckt sich dieser erste Kanalabschnitt bevorzugt normal zu der Drehachse, um welche das Ventilelement drehbar ist, wobei die Mittelachse des Kanalabschnittes die Drehachse schneidet, bevorzugt in einem Winkel von 90° schneidet. So kann das Dichtelement gerade durch den ersten Kanalabschnitt eingeführt werden und kann in der Winkellage, in welcher es später mit dem Ventilelement zur Anlage kommt, in dem Kanalabschnitt vorgeschoben werden. Dabei kann, wie oben beschrieben, eine Führung durch einen Dichtelementträger erfolgen.

Gemäß einer weiteren bevorzugten Ausführungsform ist in zumindest einem der Anschlusskanäle, bevorzugt in dem ersten Kanalabschnitt zumindest eines Anschlusskanals, ein Ventil und/oder ein Filterelement angeordnet. Bei einem solchen Ventil kann es sich insbesondere um ein Rückschlagventil handeln, welches einen Rückfluss der Flüssigkeit verhindert. Das Filterelement kann z.B. als Sieb ausgebildet sein. Das Ventil und/oder Filterelement liegen bevorzugt an der dem Ventilelement abgewandten Seite des Dichtelementes. Das Ventil und/oder Filterelement können je nach Bedarf ebenfalls durch die Montageöffnung in den Anschlusskanal bzw. dessen ersten Kanalabschnitt eingesetzt werden. Dabei kann ein Einsetzen gemeinsam mit dem Dichtelement oder nacheinander erfolgen. So kann die Sicherung bzw. die Fixierung des Dichtelementes auch durch das nachfolgend eingesetzte Ventil und/oder Filterelement erfolgen. Auch ist es denkbar das Dichtelement einteilig mit einem Ventil und/oder einem Filterelement als eine vorgefertigte Baugruppe auszubilden, welche als Ganzes durch die Montageöffnung in den Anschlusskanal eingesetzt werden kann.

Besonders bevorzugt jedoch sind das Dichtelement sowie das Ventil und/oder das Filterelement als separate Bauteile ausgebildet, welche nacheinander durch die Montageöffnung einsetzbar und entnehmbar sind. Dies hat den Vorteil, dass ein universell ausgebildetes Dichtelement Verwendung finden kann, welches mit und ohne zusätzliche Bauteile, wie einem Ventil oder einem Filterelement, eingesetzt werden kann. Darüber hinaus können die einzelnen Bauteile, das heißt z.B. ein Ventil, ein Filterelement und das Dichtelement unabhängig voneinander ausgetauscht werden.

Gemäß einer weiteren bevorzugten Ausführungsform ist der zweite Kanalabschnitt mit einem Sensoraufnahmeraum verbunden, in welchem ein Sensor, insbesondere ein Druck- und/oder Temperatursensor angeordnet ist. Ein solcher Druck- und/oder Temperatursensor kann insbesondere ein kombinierter Differenzdruck- und Temperatursensor sein. Der Temperatursensor erfasst die Temperatur der Flüssigkeit in dem zweiten Kanalabschnitt. Der Drucksensor bzw. der Druckaufnehmer des kombinierten Sensors erfasst vorzugsweise den Innendruck in dem Kanalabschnitt oder einen Differenzdruck zwischen dem Kanalabschnitt und einem weiteren Bereich im Inneren des Regulierventils. Der Sensoraufnahmeraum ist bevorzugt so ausgebildet, dass er nach außen hin geöffnet ist, so dass ein Sensor von außen eingesetzt und entnommen werden kann. Das heißt der Sensor muss nicht durch die Montageöffnung oder andere Teile des Anschlusskanals eingesetzt werden. Die Anordnung eines außerhalb des Kanalabschnittes gelegenen, aber mit diesem verbundenen Sensoraufnahmeraumes hat der Vorteil, dass der Sensor nicht in den Kanalabschnitt selber hineinragen muss, so dass dort der Strömungsquerschnitt durch den Sensor nicht eingeschränkt wird und der Sensor das Einsetzen oder Entnehmen des Dichtelementes sowie gegebenenfalls eines Filters oder eines zusätzlichen Ventils nicht behindert.

Weiter bevorzugt kann der Sensorraum mit einem der Anschlusskanäle und dem Ventilraum verbunden sein. Das heißt der Sensoraufnahmeraum ist bevorzugt mit dem zweiten Kanalabschnitt eines Anschlusskanals und dem Ventilraum verbunden. So ist es möglich mit einem in den Sensoraufnahmeraum eingesetzten Differenzdrucksensor, welcher ein kombinierter Temperatur- und Differenzdrucksensor sein kann, die Druckdifferenz zwischen dem Ventilraum und dem Anschlusskanal zu erfassen. Somit wird die Druckdifferenz ein- und ausgangsseitig des von dem Ventilelement gebildeten Ventils bestimmt. Gemeinsam mit der Stellung des Ventilelementes und dem durch diese definierten Strömungsquerschnitt lässt sich so beispielsweise auch der Durchfluss durch den Anschlusskanal berechnen.

Das Ventilelement ist besonders bevorzugt kugelförmig ausgebildet und in dem Ventilraum um eine Achse drehend bewegbar. Dabei gleitet das Ventilelement bevorzugt, wie oben beschrieben an den Dichtelementen, welche jeweils einen Ventilsitz bilden, entlang. In dem kugelförmigen Ventilelement können Ausnehmungen bzw. Freiräume ausgebildet sein, welche, wenn sie in den Bereich der Dichtelemente bzw. Ventilsitze gelangen, Strömungswege bzw. Strömungsdurchgänge definieren, so dass Flüssigkeit durch das Ventil strömen kann. Durch Verlagerung des Ventilelementes können diese Ausnehmungen unterschiedlich stark mit den Dichtelementen in Überlappung gebracht werden, so dass die Strömungsquerschnitte verändert werden können. Der oben beschriebene erste Kanalabschnitt des Anschlusskanals erstreckt sich bevorzugt normal zu der Drehachse und radial zur Oberfläche des kugelförmigen Ventilelementes.

Der Ventilraum weist zusätzlich zu den Anschlusskanälen eine Ventilmontageöffnung auf, durch welche das Ventilelement in den Ventilraum einsetzbar und aus dem Ventilraum entnehmbar ist. Die Ventilmontageöffnung ist vorzugsweise an einer Seite des Ventilraumes angeordnet, welche von den Seiten, an welchen die Anschlusskanäle in den Ventilraum münden, abgewandt ist. Bevorzugt liegt die Ventilmontageöffnung im Wesentlichen quer bzw. im rechten Winkel zu den Öffnungen, an welchen die Anschlusskanäle in den Ventilraum münden. Die Ventilmontageöffnung hat den Vorteil, dass das Ventilelement unabhängig aus dem Ventilraum entnommen werden kann, ohne andere Teile des Regulierventils demontieren zu müssen. Die Ventilmontageöffnung ist vorzugsweise durch einen lösbaren Deckel verschlossen, welcher eine Durchgangsöffnung aufweist, durch welche sich eine Welle zum Drehen des Ventilelementes im Inneren des Ventilraumes nach außen erstreckt. Der Ventilraum und die Anschlusskanäle sind weiter bevorzugt in einem gemeinsamen, vorzugsweise aus Metall gefertigten Ventilgehäuse ausgebildet. So wird eine integrierte Baueinheit dieser Teile geschaffen, welche insbesondere einstückig gefertigt werden kann, so dass weitere Montageschritte vermieden werden können und darüber hinaus die Zahl der abzudichtenden Schnittstellen reduziert wird.

Besonders bevorzugt sind zumindest ein Wandungsabschnitt einer den Ventilraum begrenzenden Wandung und zumindest ein Wandungsabschnitt zumindest eines der Anschlusskanäle und vorzugsweise aller Anschlusskanäle einstückig miteinander ausgebildet. Besonders bevorzugt sind sämtliche Wandungen des Ventilraumes und der Anschlusskanäle mit Ausnahme etwaiger Deckel, welche notwendige Öffnungen, wie die Montageöffnung und die Ventilmontageöffnung, verschließen, einstückig ausgebildet. Es kann insbesondere durch Gießen des Ventilgehäuses, beispielsweise aus Metall erfolgen. So können alle wesentlichen Strömungswege direkt in ein einstückiges Gehäuseteil integriert werden.

Gemäß einer weiteren bevorzugten Ausführungsform der Erfindung weist das erfindungsgemäße Heiz- oder Kühlanlagen-Regulierventil zwei Anschlusskanäle auf, deren erste Kanalabschnitte, welche an den Ventilraum angrenzen, in einem Winkel von größer 90° zueinander gerichtet sind. So sind die beiden Ventilsitze, welche in diesem Kanalabschnitten angeordnet sind, bezüglich der Drehachse des Ventilelementes ebenfalls in Winkelpositionen gelegen, welche mehr als 90° voneinander beabstandet sind. Weiter bevorzugt sind jedoch die zweiten Enden der zugehörigen Anschlusskanäle so gelegen, dass sie in einem Winkel von 90° zueinander gerichtet sind, das heißt ihre Stirnseiten im Winkel von 90° zueinander angeordnet sind. Ist ein dritter Anschlusskanal vorgesehen, so ist dessen zweites Ende vorzugsweise entlang derselben Längsachse wie das zweite Ende eines ersten Anschlusskanales ausgerichtet, während der zweite Anschlusskanal mit seinem zweiten Ende im Winkel von 90° zu dem beiden anderen Anschlusskanälen ausgerichtet ist. So wird eine T-förmige Konfiguration der Anschlüsse des Regulierventiles geschaffen, welche einer bei derartigen Ventilen üblichen Anschlusskonfiguration entspricht.

Nachfolgend wird die Erfindung beispielhaft anhand der beigefügten Abbildungen beschrieben. In diesen zeigt:
- Fig. 1: eine perspektivische Ansicht eines erfindungsgemäßen Heiz- oder Kühlanlagen-Regulierventils,
- Fig. 2: eine Draufsicht auf das Ventilgehäuse des Regulierventils gemäß Fig. 1 ohne Antrieb,
- Fig. 3: eine Schnittansicht eines Ventilgehäuses, welches in seinem grundsätzlichen Aufbau dem Ventilgehäuse gemäß Fig. 2 entspricht und
- Fig. 4: eine geschnittene perspektivische Ansicht des Ventilgehäuses gemäß Figuren 1 und 2.

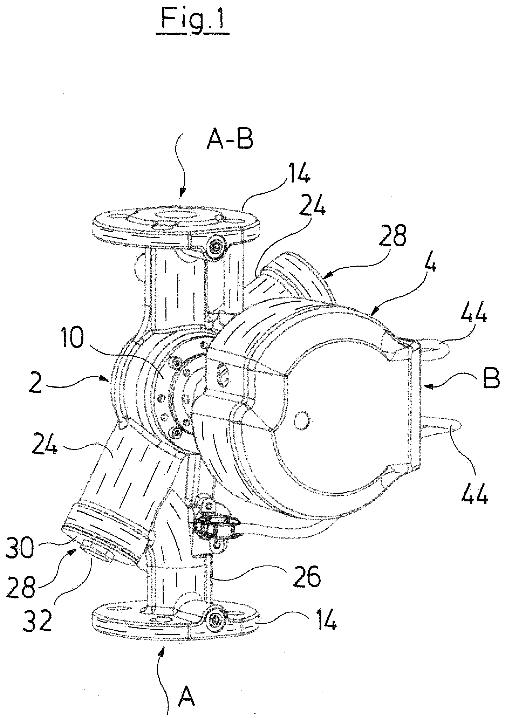

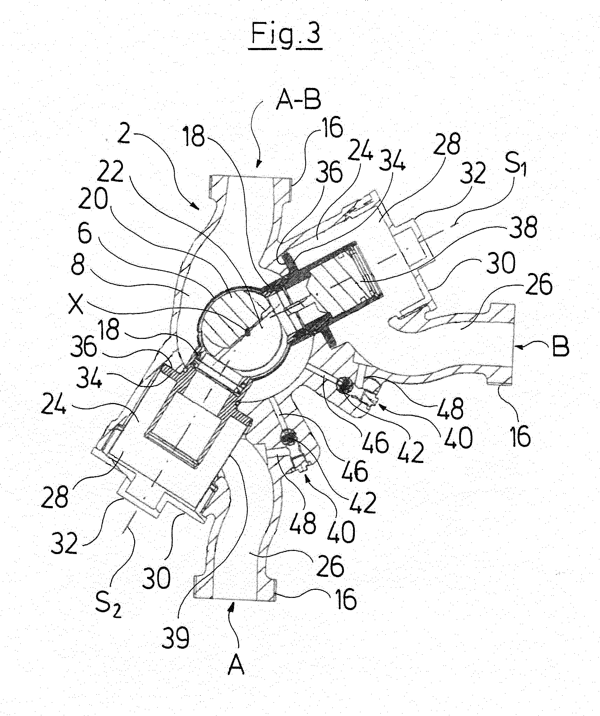

Das in Fig. 1 gezeigte Regulierventil ist als Mischerventil oder als Strömungs-Teilungsventil ausgebildet und besteht im Wesentlichen aus zwei Komponenten, nämlich einem Ventilgehäuse 2 und einem Antrieb 4. Im Inneren des Ventilgehäuses 2 ist ein bewegliches Ventilelement 6 (siehe Fig. 3) in Form einer Kugel angeordnet. Das Ventilelement 6 ist in einem Ventilraum 8 gelegen und durch den Antrieb 4 um seine Drehachse X drehbar. Die Drehachse X erstreckt sich durch den Kugelmittelpunkt des Ventilelements 6. Zur Verbindung mit dem Antrieb 4 weist das Ventilelement 6 eine Welle auf, welche sich durch eine Öffnung in einem Deckel 10, welcher eine Ventilmontageöffnung 12 des Ventilgehäuses 2 verschließt, nach außen erstreckt. Der Antrieb 4 weist beispielsweise einen Schrittmotor und eine zugehörige Steuerelektronik auf.

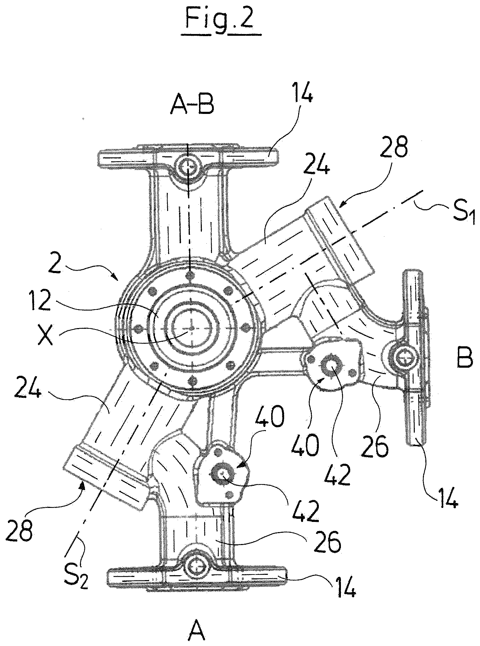

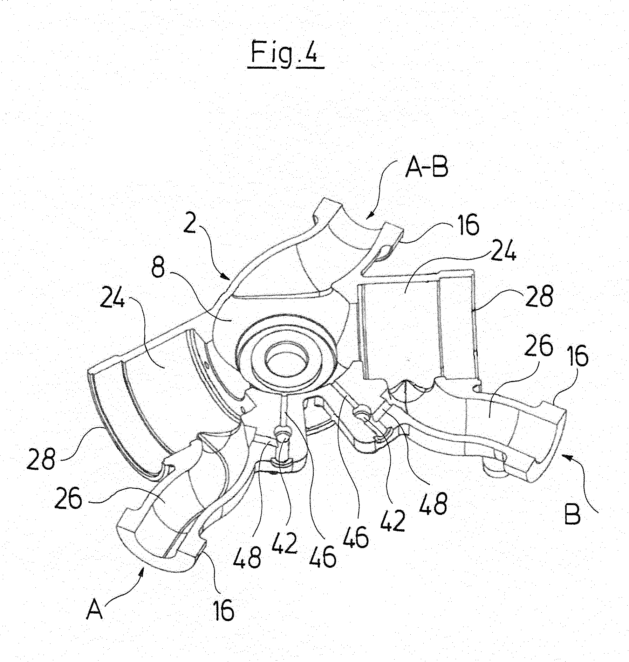

Das Ventilgehäuse 2 weist in diesem Ausführungsbeispiel drei Anschlüsse A, B und A-B auf, welche über sich anschließende Anschlusskanäle mit dem Ventilraum 8 in Verbindung stehen. Bei Verwendung als Mischerventil zum Mischen zweier Flüssigkeitsströmungen, dienen die Anschlüsse A und B als Eingänge und der Anschluss A-B dient als Ausgang für eine gemischte Flüssigkeit. Umgekehrt kann das Ventil auch als Strömungs-Teilventil zum Teilen einer Flüssigkeit eingesetzt werden, dann dient der Anschluss A-B als Eingang und die Anschlüsse A und B dienen als Ausgänge, aus welchen jeweils ein Teil der am Anschluss A-B zugeführten Flüssigkeitsströmung austritt. Die Anschlüsse A, B und A-B sind in den Beispielen gemäß Figuren 1, 2 und 4 mit Flanschen 14 versehen. In der Ansicht gemäß Fig. 3 und 4 ist eine alternative Ausgestaltung als Gewinde 16 zum Anschluss sich anschließender Leitungen gezeigt. Die Anschlusskanäle von den Anschlüssen A und B münden in dem Ventilraum 8 jeweils an einem von einem Dichtelement 18 gebildeten Ventilsitz, wie in Fig. 3 gezeigt ist. Die Dichtelemente 18 liegen an der Oberfläche des Ventilelementes 6 dichtend an. Das Ventilelement 6 weist einen geschlossenen Abschnitt 20 sowie eine Ausnehmung 22 auf. Wenn der geschlossene Abschnitt 20 einen Ventilsitz vollständig überdeckt, das heißt den von dem Dichtelement 18 umschlossenen Durchgang vollständig überdeckt und verschließt, ist der zugehörige Strömungsweg des jeweiligen Anschlusskanals geschlossen. Kommt die Ausnehmung 22 ganz oder teilweise zur Überdeckung mit dem von dem Dichtelement 18 umschlossenen Strömungsdurchgang, so wird dieser und damit die Verbindung zu dem jeweiligen Anschlusskanal ganz oder teilweise geöffnet. Das Ventilelement 6 ist so ausgebildet, dass es bei seiner Drehung, gleichzeitig den Strömungsweg eines Anschlusskanales A öffnet, während es gleichzeitig den Strömungsweg des zweiten Anschlusskanals B schließt, oder umgekehrt. So kann ein Mischungs- oder Teilungsverhältnis der durch die Anschlüsse A und B fließenden Strömungen eingestellt werden.

Die sich an die Anschlüsse A und B anschließenden Anschlusskanäle weisen jeweils einen ersten Kanalabschnitt 24 und einen zweiten Kanalabschnitt 26 auf. Der zweite Kanalabschnitt 26 endet jeweils an einem zweiten offenen Ende des Anschlusskanales, welcher den Anschluss A bzw. B bildet. Der erste Kanalabschnitt 24 bildet jeweils das erste Ende des Anschlusskanales, an welchem das Dichtelement 18 angeordnet ist, und welches zu dem Ventilraum 8 hin geöffnet ist.

Die ersten Kanalabschnitte 24 erstrecken sich mit ihren Längsachsen S₁ und S₂ normal zu der Drehachse X des Ventilelementes 6, das heißt radial zu dem Ventilelement 6. Dabei erstrecken sich die beiden ersten Kanalabschnitte 24 mit ihren Längsachsen S₁ und S₂ in einer gemeinsamen Ebene, welche normal zu der Drehachse X des Ventilelements 6 verläuft. Gleichzeitig sind die beiden Längsachsen S₁ und S₂ gewinkelt zueinander in einem Winkel von größer 90°, hier in einem Winkel von 150°. Die ersten Kanalabschnitte 24 erstrecken sich ausgehend von ihrem ersten, dem Ventilraum 8 zugewandten Ende gerade zu einer am entgegengesetzten Axialende, in Richtung der Längsachse S₁, bzw. S₂ gesehen, gelegenen Montageöffnung 28. Die Montageöffnungen 28 sind jeweils durch ein Verschlusselement in Form eines abnehmbaren Deckels 30 verschlossen. In diesem Ausführungsbeispiel sind die Deckel 30 in die Montageöffnungen 28 über ein Gewinde einschraubbar. Zum Drehen weisen die Deckel 30 zentral jeweils einen sechskantförmigen Vorsprung 32 auf, welcher beispielsweise mit einem Schraubenschlüssel ergriffen werden kann, um den Deckel 30 zu drehen. Die Deckel 30 können aus Kunststoff oder aus Metall ausgebildet sein. Das Ventilgehäuse 2 ist vorzugsweise als Gussbauteil aus Metall gefertigt.

Die Dichtelemente 18 sind jeweils an einem Dichtelementträger 34 befestigt, welcher die Dichtelemente 18 trägt und in definierter Position in den ersten Kanalabschnitten 24 fixiert. Der Dichtelementträger 34 liegt dabei jeweils an einer Anlageschulter 36 in dem ersten Kanalabschnitt 24 an, wobei die Anlageschulter 36 die Axialbewegung in Richtung zu dem Ventilraum 8 hin verhindert und das Dichtelement 18 so in dieser Richtung fixiert. In entgegengesetzter Richtung erfolgt die axiale Fixierung des Dichtelementträgers 34 und des an ihm befestigten Dichtelements 18 jeweils durch den Deckel 30, ein Gewinde oder in anderer, hier nicht näher gezeigter Weise.

Die ersten Kanalabschnitte 24 sind nicht nur gerade ausgebildet, sondern weisen einen durchgehend konstanten Innenquerschnitt von ihrem dem Ventilraum 8 zugewandten Axialende bis zu der Montageöffnung 28 auf oder erweitern sich zu der Montageöffnung 28 hin, so dass jeweils das Dichtelement 18 mit dem Dichtelementträger 34 durch die Montageöffnung 28 von außen eingesetzt und bis in die in Fig. 3 gezeigte Position vorgeschoben werden kann, in welcher die Dichtelemente 18 an dem Ventilelement 6 dichtend zur Anlage kommen. Durch das Einsetzen und Austauschen der Dichtelemente 18 durch die Montageöffnungen 28, ist das Einsetzen und Austauschen unabhängig von den Anschlüssen A und B möglich. So kann das Ventilgehäuse 2 auch zum Austausch der Dichtelemente 18 in einer Heizungs- oder Kühlanlage eingebaut verbleiben, das heißt etwaige Anschlussleitungen, welche mit den Anschlüssen A und B verbunden sind, müssen nicht gelöst werden.

In die ersten Kanalabschnitte 24 kann außer einem Ventilelement 18 auch ein weiteres Bauteil, wie beispielsweise ein Rückschlagventil 38 und/oder ein Filter oder Sieb 39 eingesetzt werden. Ein solches Rückschlagventil 38 ist in Fig. 3 in dem ersten Kanalabschnitt 24 des zu dem zweiten Anschluss B führenden Strömungsweges gezeigt. Ein Filter bzw. Sieb 39 in Form eines rohrförmigen Siebeinsatzes ist in dem ersten Kanalabschnitt 24 des zu dem ersten Anschluss A führenden Strömungsweg gezeigt. Auch diese zusätzlichen Bauteile, wie Ventile oder Filter bzw. Siebe 39 lassen sich leicht durch die Montageöffnungen 28 austauschen oder reinigen.

Die zweiten Kanalabschnitte 26 der Anschlusskanäle verlaufen von den Anschlüssen A und B derart gekrümmt, dass sie umfänglich in die ersten Kanalabschnitte 24 einmünden. So liegen die zweiten Kanalabschnitte 26 bzw. die sie bildenden Gehäuseteile und die Flansche 14 oder Gewinde 16 außerhalb des Innenquerschnittes sowie der sich radial nach außen erstreckenden Projektionen des jeweiligen Innenquerschnittes der ersten Kanalabschnitte 24. So behindern diese Bauteile nicht das Einsetzen und Entnehmen von Bauteilen aus den ersten Kanalabschnitten 24. Ferner ist es so möglich, die drei Anschlüsse A, B und A-B in üblicher Weise im rechten Winkel zueinander, d.h. T-förmig zueinander anzuordnen.

In dem Ventilgehäuse 2 sind darüber hinaus zwei Sensoraufnahmen 40 ausgebildet. Diese weisen jeweils einen Sensoraufnahmeraum 42 auf, in welchen ein Mess- bzw. Aufnahmebereich bzw. Messfühler eines Sensors eingreifen kann. Diese Sensoren sind vorzugsweise kombinierte Temperatur- Differenzdrucksensoren, welche außerhalb des Ventilgehäuses 2 über Kabel 44 mit der Elektronik des Antriebes 4 verbunden sind. Die Sensoraufnahmeräume 42 sind jeweils über einen Verbindungskanal 46 mit dem Inneren des Ventilraumes 8 verbunden, wobei sie in den Ventilraum 8 in einem Bereich außerhalb des Ventilelementes 6 einmünden und so den Druck an einer den Dichtelementen 18 im Strömungsweg abgewandten Seite des Ventilelementes 6 erfassen können. Darüber hinaus ist jeder Sensoraufnahmeraum 42 über eine Verbindung 48 mit dem zugehörigen zweiten Kanalabschnitt 26 verbunden. So kann ein in den Sensoraufnahmeraum 42 eingesetzter Differenzdrucksensor eine Druckdifferenz zwischen den zugehörigen zweiten Kanalabschnitt 26 und dem Ventilraum 8, das heißt stromaufwärts und stromabwärts der durch das Ventilelement 6 gebildeten Querschnittsverengung erfassen. Auf Grundlage dieses Differenzdruckes kann beispielsweise der Durchfluss ermittelt werden. Dadurch, dass der Sensoraufnahmeraum 42 außerhalb des Strömungsweges in dem zweiten Kanalabschnitt 26 gelegen ist, beeinträchtigt ein Sensor zum Erfassen der Temperatur und/oder des Druckes nicht die Strömung durch den zweiten Kanalabschnitt 26.

Wie in den Figuren zu erkennen ist, ermöglicht die erfindungsgemäße Ausgestaltung es, alle wesentlichen Komponenten in ein gemeinsames Ventilgehäuse 2 zu integrieren, wobei dieses Ventilgehäuse 2 bis auf die erforderlichen Deckel und Verschlusselemente, insbesondere den Deckel 10 und die Deckel 30, einstückig ausgebildet werden kann. Dennoch ist durch die zusätzlichen Montageöffnungen 28, welche unabhängig von den Anschlüssen A und B geöffnet werden können, eine gute Zugänglichkeit der Dichtelemente 18 sowie möglicher Ventile und Filter gegeben, wodurch die Montierbarkeit und die Wartung vereinfacht wird.

### Bezugszeichenliste

- 2: - Ventilgehäuse
- 4: - Antrieb
- 6: - Ventilelement
- 8: - Ventilraum
- 10: - Deckel
- 12: - Ventilmontageöffnung
- 14: - Flansche
- 16: - Gewinde
- 18: - Dichtelemente
- 20: - geschlossener Abschnitt
- 22: - Ausnehmung
- 24: - erste Kanalabschnitte
- 26: - zweite Kanalabschnitte
- 28: - Montageöffnungen
- 30: - Deckel
- 32: - Vorsprünge
- 34: - Dichtelementträger
- 36: - Anlageschultern
- 38: - Rückschlagventil
- 39: - Filter
- 40: - Sensoraufnahmen
- 42: - Sensoraufnahmeräume
- 44: - Kabel
- 46: - Verbindungskanäle
- 48: - Verbindungen
- A, B, A-B: - Anschlüsse
- X: - Drehachse
- S₁, S₂: - Längsachsen

## Patentansprüche

1. Heiz- oder Kühlanlagen-Regulierventil welches als Mischerventil oder Strömungs-Teilungsventil mit zumindest drei Anschlusskanälen (24, 26) ausgebildet ist, mit einem in einem Ventilraum (8) angeordneten bewegbaren Ventilelement (6), wobei die zumindest drei Anschlusskanälen (24, 26) jeweils mit einem ersten Ende in den Ventilraum (8) münden und deren entgegengesetztes zweites Ende (A, B) der Verbindung mit einem fluidführenden Bauteil dient, wobei in zumindest einem der Anschlusskanäle (24, 26) an dessen erstem Ende ein Dichtelement (18) angeordnet ist, welches mit dem Ventilelement (6) in Anlage ist, wobei der zumindest eine Anschlusskanal (24, 26), in dem das Dichtelement (18) angeordnet ist, zusätzlich zu seinem zweiten Ende (A, B) eine Montageöffnung (28) aufweist, durch welche das Dichtelement (18) in den Anschlusskanal (24) einsetzbar und aus dem Anschlusskanal (24) entnehmbar ist, und wobei der Ventilraum (8) zusätzlich zu den Anschlusskanälen (24, 26) eine Ventilmontageöffnung (12) aufweist, durch welche das Ventilelement (6) in den Ventilraum (8) einsetzbar und aus dem Ventilraum (8) entnehmbar ist.

2. Heiz- oder Kühlanlagen-Regulierventil nach Anspruch 1, **dadurch gekennzeichnet, dass** in zweien der Anschlusskanäle (24, 26) jeweils an deren ersten Ende ein Dichtelement (18) angeordnet ist, welches mit dem Ventilelement (6) in Anlage ist.

3. Heiz- oder Kühlanlagen-Regulierventil nach einem der vorangehenden Ansprüche, **dadurch gekennzeichnet, dass** die Montageöffnung (28) durch eine abnehmbares Verschlusselement (30) verschlossen ist.

4. Heiz- oder Kühlanlagen-Regulierventil nach einem der vorangehenden Ansprüche, **dadurch gekennzeichnet**, das der zumindest eine Anschlusskanal (24, 26), in welchem das Dichtelement (18) angeordnet ist, einen ersten in den Ventilraum (8) mündenden und das Dichtelement (18) aufnehmenden ersten Kanalabschnitt (24) und einen zweiten an das zweite Ende (A, B) angrenzenden Kanalabschnitt (26) aufweist, wobei die Montageöffnung (28) an einem dem Ventilraum (8) abgewandten Axialende dieses ersten Kanalabschnittes (24) gelegen ist.

5. Heiz- oder Kühlanlagen-Regulierventil nach Anspruch 4, **dadurch gekennzeichnet, dass** der erste Kanalabschnitt (24) zwischen dem Ventilraum (8) und der Montageöffnung (28) gerade verläuft.

6. Heiz- oder Kühlanlagen-Regulierventil nach Anspruch 4 oder 5, **dadurch gekennzeichnet, dass** der zweite Kanalabschnitt (26) umfänglich in den ersten Kanalabschnitt (24) einmündet.

7. Heiz- oder Kühlanlagen-Regulierventil nach einem der Ansprüche 4 bis 6, **dadurch gekennzeichnet, dass** sich der erste Kanalabschnitt (24) radial zu dem Ventilraum (8) und/oder dem in dem Ventilraum (8) angeordneten Ventilelement (6) erstreckt.

8. Heiz- oder Kühlanlagen-Regulierventil nach einem der Ansprüche 4 bis 7, **dadurch gekennzeichnet, dass** in dem ersten Kanalabschnitt (24) zumindest eines Anschlusskanals ein Ventil (38) und/oder ein Filterelement angeordnet ist.

9. Heiz- oder Kühlanlagen-Regulierventil nach Anspruch 8, **dadurch gekennzeichnet, dass** das Dichtelement (18) sowie das Ventil (38) und/oder das Filterelement separate Bauteile sind, welche nacheinander durch die Montageöffnung (28) einsetzbar und entnehmbar ist.

10. Heiz- oder Kühlanlagen-Regulierventil nach einem der Ansprüche 4 bis 9, **dadurch gekennzeichnet, dass** der erste Kanalabschnitt (24) mit einem Sensoraufnahmeraum (42) verbunden ist, in welchem ein Sensor, insbesondere ein Druck- und/oder Temperatursensor angeordnet ist.

11. Heiz- oder Kühlanlagen-Regulierventil nach Anspruch 10, **dadurch gekennzeichnet, dass** der Sensoraufnahmeraum mit einem der Anschlusskanäle (24, 26) und dem Ventilraum (8) verbunden ist.

12. Heiz- oder Kühlanlagen-Regulierventil nach einem der vorangehenden Ansprüche, **dadurch gekennzeichnet, dass** das Ventilelement (6) kugelförmig ausgebildet und in dem Ventilraum (8) um eine Achse (X) drehend bewegbar ist.

13. Heiz- oder Kühlanlagen-Regulierventil nach einem der vorangehenden Ansprüche, **dadurch gekennzeichnet, dass** der Ventilraum (8) und die Anschlusskanäle (24, 26) in einem gemeinsamen, vorzugsweise aus Metall gefertigten Ventilgehäuse (2) ausgebildet sind.

14. Heiz- oder Kühlanlagen-Regulierventil nach Anspruch 13, **dadurch gekennzeichnet, dass** zumindest ein Wandungsabschnitt einer den Ventilraum (8) begrenzenden Wandung und zumindest ein Abschnitt zumindest eines der Anschlusskanäle (24, 26) und vorzugsweise aller Anschlusskanäle (24, 26) einstückig miteinander ausgebildet sind.

## Claims

1. A heating or cooling installation control valve with a movable valve element (6) which is arranged in a valve space (8), as well as at least three connection channels (24, 26) which each run out with a first end into the valve space (8) and whose opposite second end (A, B) serves for connection to a fluid-leading component, wherein a sealing element (18) is arranged in at least one of the connection channels (24, 26) at its first end, said sealing element being in contact with the valve element (6), **characterised in that**
the at least one connection channel (24, 26), in which the sealing element (18) is arranged, additionally to its second end (A, B) comprises an assembly opening, through which the sealing element (18) can be inserted into the connection channel (24) and removed from of the connection channel (24) and **in that** in addition to the connection channels (24, 26) the valve space (8) offers a valve assembly opening (12) through which the valve element (6) can be inserted into the valve space (8) and removed from the valve space (8).

2. A heating or cooling installation control valve according to claim 1, **characterised in that** a sealing element (18) which is in contact with the valve element (6) is arranged in two of the connection channels (24, 26) in each case at their first end.

3. A heating or cooling installation control valve according to one of the preceding claims, **characterised in that** the assembly opening (28) is closed by a removable closure element (30).

4. A heating or cooling installation control valve according to one of the preceding claims, **characterised in that** the at least one connection channel (24, 26), in which the sealing element (18) is arranged comprises a first channel section (24) which runs out into the valve space (8) and receives the sealing element (18), and a second channel section (26) which is adjacent the second end (A, B), wherein the assembly opening (28) is situated at an axial end of this first channel section (24), said axial end being away from the valve space (8).

5. A heating or cooling installation control valve according to claim 4, **characterised in that** the first channel section (24) runs in a straight line between the valve space (8) and the assembly opening (28).

6. A heating or cooling installation control valve according to claim 4 or 5, **characterised in that** the second channel section (26) peripherally runs out into the first channel section (24).

7. A heating or cooling installation control valve according to one of the claims 4 to 6, **characterised in that** the first channel section (24) extends radially to the valve space (8) and/or to the valve element (6) arranged in the valve space (8).

8. A heating or cooling installation control valve according to one of the claims 4 to 7, **characterised in that** a valve (38) and/or a filter element is arranged in the first channel section (24) of at least one connection channel.

9. A heating or cooling installation control valve according to claim 8, **characterised in that** the sealing element (18) as well as the valve (38) and/or the filter element are separate components which can be inserted and removed, one after the other, through the assembly opening (28).

10. A heating or cooling installation control valve according to one of the claims 4 to 9, **characterised in that** the first channel section (24) is connected to a sensor receiving space (42), in which a sensor, in particular a pressure sensor and/or a temperature sensor is arranged.

11. A heating or cooling installation control valve according to claim 10, **characterised in that** the sensor receiving space is connected to one of the connection channels (24, 26) and to the valve space (8).

12. A heating or cooling installation control valve according to one of the preceding claims, **characterised in that** the valve element (6) is designed in a ball-shaped manner and is rotatingly movable in the valve space (8) about an axis (X).

13. A heating or cooling installation control valve according to one of the preceding claims, **characterised in that** the valve space (8) and the connection channels (24, 26) are formed in a common valve housing (2) which is preferably manufactured of metal.

14. A heating or cooling installation control valve according to claim 13, **characterised in that** at least one wall section of a wall delimiting the valve space (8), and at least one section of at least one of the connection channels (24, 26) and preferably of all connection channels (24, 26) are designed with one another as one piece.

## Revendications

1. Valve de régulation pour installation de chauffage ou de réfrigération qui est configurée comme valve mélangeuse ou valve de division de flux avec au moins trois canaux de raccordement (24, 26),
avec un élément de valve (6) mobile disposé dans un espace pour valve (8), lesdits au moins trois canaux de raccordement (24, 26) débouchant chacun par une première extrémité dans l'espace pour valve (8) et leur seconde extrémité (A, B), opposée, servant au raccordement à un composant transporteur de fluide, dans au moins un des canaux de raccordement (24, 26), un élément d'étanchéité (18) étant disposé à la première extrémité de celui-ci, qui est en appui contre l'élément de valve (6),
ledit au moins un canal de raccordement (24, 26), dans lequel l'élément d'étanchéité (18) est disposé, comprenant, en plus de sa seconde extrémité (A, B), une ouverture de montage (28) par laquelle l'élément d'étanchéité (18) peut être inséré dans le canal de raccordement (24) et peut être retiré du canal de raccordement (24), et l'espace pour valve (8) comprenant, en plus des canaux de raccordement (24, 26), une ouverture de montage de valve (12) par laquelle l'élément de valve (6) peut être inséré dans l'espace pour valve (8) et peut être retiré de l'espace pour valve (8).

2. Valve de régulation pour installation de chauffage ou de réfrigération selon la revendication 1, **caractérisée en ce que**, dans deux des canaux de raccordement (24, 26), à leur première extrémité respective, un élément d'étanchéité (18) est disposé qui est en appui contre l'élément de valve (6).

3. Valve de régulation pour installation de chauffage ou de réfrigération selon l'une des revendications précédentes, **caractérisée en ce que** l'ouverture de montage (28) est obturée par un élément d'obturation (30) amovible.

4. Valve de régulation pour installation de chauffage ou de réfrigération selon l'une des revendications précédentes, **caractérisée en ce que** ledit au moins un canal de raccordement (24, 26) dans lequel l'élément d'étanchéité (18) est disposé, comprend un premier tronçon de canal (24) débouchant dans l'espace pour valve (8) et recevant l'élément d'étanchéité (18) et un deuxième tronçon de canal (26) adjacent à la seconde extrémité (A, B), l'ouverture de montage (28) étant située à une extrémité axiale de ce premier tronçon de canal (24) qui est éloignée de l'espace pour valve (8).

5. Valve de régulation pour installation de chauffage ou de réfrigération selon la revendication 4, **caractérisée en ce que** le premier tronçon de canal (24) s'étend de manière rectiligne entre l'espace pour valve (8) et l'ouverture de montage (28).

6. Valve de régulation pour installation de chauffage ou de réfrigération selon la revendication 4 ou 5, **caractérisée en ce que** le deuxième tronçon de canal (26) débouche, par son pourtour, dans le premier tronçon de canal (24).

7. Valve de régulation pour installation de chauffage ou de réfrigération
selon l'une des revendications 4 à 6, **caractérisée en ce que** le premier tronçon de canal (24) s'étend radialement par rapport à l'espace pour valve (8) et/ou à l'élément de valve (6) disposé dans l'espace pour valve (8).

8. Valve de régulation pour installation de chauffage ou de réfrigération selon l'une des revendications 4 à 7, **caractérisée en ce qu'**une valve (38) et/ou un élément filtrant est disposé dans le premier tronçon (24) d'au moins un canal de raccordement.

9. Valve de régulation pour installation de chauffage ou de réfrigération selon la revendication 8, **caractérisée en ce que** l'élément d'étanchéité (18) ainsi que la valve (38) et/ou l'élément filtrant sont des composants individuels qui sont adaptés pour être insérés et retirés les uns après les autres par l'ouverture de montage (28).

10. Valve de régulation pour installation de chauffage ou de réfrigération selon l'une des revendications 4 à 9, **caractérisée en ce que** le premier tronçon de canal (24) est relié à un espace de réception pour capteur (42) dans lequel un capteur, notamment un capteur de pression et/ou de température, est disposé.

11. Valve de régulation pour installation de chauffage ou de réfrigération selon la revendication 10, **caractérisée en ce que** l'espace de réception pour capteur est relié à un des canaux de raccordement (24, 26) et à l'espace pour valve (8).

12. Valve de régulation pour installation de chauffage ou de réfrigération selon l'une des revendications précédentes, **caractérisée en ce que** l'élément de valve (6) présente une forme sphérique et est mobile en rotation, dans l'espace pour valve (8), autour d'un axe (X).

13. Valve de régulation pour installation de chauffage ou de réfrigération selon l'une des revendications précédentes, **caractérisée en ce que** l'espace pour valve (8) et les canaux de raccordement (24, 26) sont formés dans un carter de valve (2) commun réalisé de préférence en métal.

14. Valve de régulation pour installation de chauffage ou de réfrigération selon la revendication 13, **caractérisée en ce qu'**au moins une partie de paroi d'une paroi délimitant l'espace pour valve (8) et au moins une partie d'au moins un des canaux de raccordement (24, 26) et, de préférence, de tous les canaux de raccordement (24, 26) sont réalisées, les unes avec les autres, en une seule pièce.
